# EUROPEAN PATENT SPECIFICATION

(11) **EP 0 547 016 B1**
(45) Date of publication and mention of the grant of the patent: **02.08.1995**
(21) Application number: 92850278.0
(22) Date of filing: 26.11.1992
(51) Int. Cl.: B27G 5/02

(54) **Arrangement for a mitre sawing apparatus**
Anordnung für ein Gehrungssägegerät
Dispositif pour un appareil pour scier des onglets

(30) Priority: 28.11.1991 SE 9103541
(43) Date of publication of application: 16.06.1993
(73) Proprietor: NOBEX AKTIEBOLAG, S-830 02 Mattmar (SE)
(72) Inventor: Borgh, Ake, S-830 02 Mattmar (SE)
(74) Representative: Nordén, Ake

(56) References cited:
- FR-A- 2 300 663
- GB-A- 503 487
- US-A- 834 073
- US-A- 976 296
- US-A- 1 048 447
- US-A- 3 397 722
- US-A- 4 346 636
- US-A- 4 712 462

## Description

### Technical field

The present invention relates to mitre sawing apparatuses of the kind which comprises a frame with a sawing table or the like for the workpiece to be mitred and attached thereto a holder and guide arrangement for a saw, in conjunction with which the saw is capable of pivoting about an axis parallel with the first and perpendicular to the second of two guide and stop surfaces on the saw table.

### Prior art

In mitre sawing apparatuses of the kind encountered most commonly, it is possible to cut a workpiece at different angles to the plane in which one of the stop surfaces and one side of the workpiece are situated. Adjustment of the cutting angles is performed by pivoting the holder and guide arrangement of the saw about the aforementioned axis. It is usual for an adjustment arrangement arranged therein to be executed with a number of preset fixed positions or angles, in which the saw can be securely locked.

If it is wished to cut the workpiece at an angle in relation to a plane at right angles to the aforementioned plane, the workpiece is simply turned so that the new plane will lie parallel with the pivoting axis of the saw.

There has been an awareness for some time of the need to saw at an angle, including in planes which lie between the two otherwise possible planes, and American Patent Specification 3 397 722 contains a reference to how this can be achieved by positioning abutment bodies capable of displacement along angled grooves provided in the horizontal stop surface. By moving the abutment bodies and locking them securely at a predetermined distance from the stop surface, which is parallel with, i.e. vertical to, the imaginary pivoting axis of the saw in this case, edge stops are provided for one edge of a workpiece, which at the same time can be supported against the side of the table which forms the aforementioned vertical stop surface.

The previously disclosed arrangement is provided with a mitre saw of the more primitive kind, which lacks a support, guide and pivot arrangement for the saw, which is guided instead by means of grooves in the side pieces of the mitre box. The previously disclosed stop arrangement is difficult to operate, especially as it is positioned between the side pieces of the mitre box which consist of the upright walls, which makes it difficult to adjust and reset the movable stop bodies along the horizontal stop surface situated between the walls. It is also difficult to obtain precisely the same adjustment position for the stop bodies so that the workpieces will be positioned correctly and in the intended angular positions. Each stop body has its own clamping arrangement consisting of a screw with a wing nut, which requires to be slackened and retightened at a new location each time it is to be reset.

In addition to this the stop bodies and their retaining screws and wing nuts must be removed in their entirety before the mitre box can be used in the conventional fashion and vice versa.

### Objects of the invention

One object of the invention is to make available a mitre saw arrangement which, in addition to the customary two kinds of angled sawing operations, also permits sawing at an angle in relation to planes other than these two. Another object is to make available an arrangement which is simple to use and does not require special resetting or adjustment operations and which is accordingly ready to be used for any mitre-cutting operation at any time while work is proceeding.

A further object is to produce a mitre saw arrangement which, in spite of the fact that it offers the possibility of additional working operations, is not significantly more expensive and more difficult to manufacture than other mitre saw arrangements.

### Description of the present invention

The new arrangement is characterized in that at least one, and preferably a series of fixed stops is arranged in and recessed into one stop surface of the saw table, and in that the free edge of the other stop surface, situated at an angle thereto, forms a further support for the workpiece, which arrangement permits the positioning of a workpiece with one corner on one long side in engagement with one of the recessed stops and with a long side or surface adjacent to the aforementioned corner in contact in a previously disclosed fashion with the edge of the vertical side of the table, thereby permitting angled sawing against a plane defined by the aforementioned stop.

### Description of the preferred embodiment

A preferred embodiment of the mitre sawing apparatus arranged in accordance with the invention is described below in greater detail with reference to the accompanying drawing, in which
Fig. 1 is a view from above a mitre saw arrangement, in which only the saw unit itself is shown;
Fig. 2 is a view from one end of a detail of the arrangement, namely the saw table; and
Fig. 3 shows an alternative embodiment of the same detail as Fig. 2.

The mitre saw arrangement consists of a frame 1 which carries a table 2 acting as a support and a stop and pivot and guide devices for the actual saw, the centre and possible outer positions of which are marked respectively by the designation 3 and 4. The pivot and guide devices consist of a centre plate 5 capable of pivoting about a pin and about a vertical pivot axis A, which coincides with the plane in which a vertical surface of the saw table 2 lies, and a projection 6 projecting outwards from the centre plate with upward-projecting guideways 7 for the guide bars for the saw. The centre part 8 of the horizontal side of the saw table 2 is executed with a quadrant subdivided into degrees, against which an indicator arrow 9 on the pivoting centre plate 5 can be adjusted.

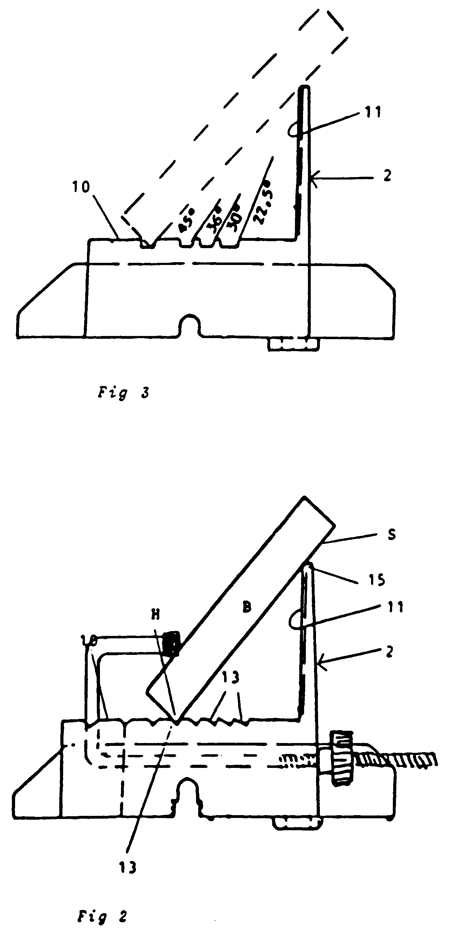

The saw table 2, which is shown in profile as two different embodiments in Figs. 2 and 3, and which is attached in a stable fashion to the frame 1, exhibits the horizontal stop surface 10 and the vertical stop surface 11. In accordance with the invention the horizontal stop surface is provided with a row of stops against which a workpiece can be rested, at the same time as one side of it rests against the upper edge of the vertical stop surface 11.

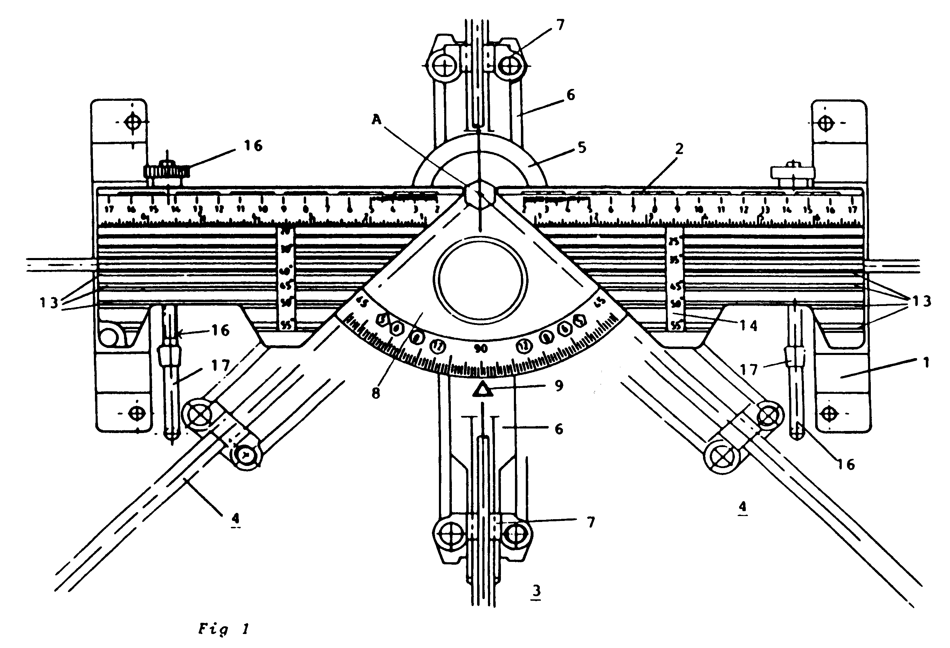

These stops are designated by 13 in Fig. 1 and they consist of grooves formed in the material of the horizontal stop surface of the saw table, which grooves lie below the level of the rest of the stop surface. Fig. 1 also shows transverse recesses 14 which provide space for degree markings and are deeper than the grooves 13.

Arranged immediately adjacent to the vertical surface 11 is a scale with dimensional markings starting from its central point.

In the preferred embodiment shown in Fig. 2, and in Fig. 1 for that matter, the grooves 13 consist of two surfaces which are at right angles to one another, in conjunction with which one surface lies in a plane which, were it to be extended, would touch the upper edge (15) of the vertical surface (11) serving as a stop for the adjacent surface of the workpiece. Fig. 2 shows how a board designated as B rests with one of its corners H in one of the grooves 13 with the edges connected to the corner of the board in contact with both sides of the groove and the side S adjacent to the corner touching the upper edge 15 of the vertical stop 11. 'U'-shaped clamping devices 16, represented only schematically in Fig. 1, are used in order to hold the board in position. The board B is forced downwards on the one hand into the respective groove 13 and at the same time against the aforementioned upper edge 15 by the upper, approximately horizontal shanks 17 of the clamping devices.

The embodiment in accordance with Fig. 3 differs from that described in that the grooves 13 there are of approximately rectangular cross-section, i.e. they are bounded by two walls which form a right angle with the stop surface 10. In this way the front and the rear edge of the groove engage respectively with the edge side and the flat side of the workpiece, the actual corner of which accordingly does not need to bottom in the groove. This means that precise positioning can be achieved, even if the corners of the workpiece were to be chamfered or rounded.

Both the embodiments of a support rail or stop rail described here lend themselves very well to die casting, which calls for a minimum of finishing.

## Claims

1. Arrangement for a mitre sawing apparatus comprising a saw table forming a support and a stop exhibiting at least one essentially horizontal and one essentially vertical stop surface arranged at an angle thereto for the positioning of a workpiece and guide devices for a saw so arranged as to permit the alignment of the saw in an arbitrary number of angles for the purpose of permitting the workpiece to be cut at an angle, in conjunction with which the saw table exhibits, in addition to the two stop surfaces arranged at an angle to one another, stop devices permitting the inclined positioning of the workpiece, **characterized in that** the stop devices consist of a number of grooves (13) arranged in the essentially horizontal stop surface (10) in the saw table (2) so arranged as to accommodate a corner part of the workpiece (B), the side of which immediately adjacent to the corner is intended to be supported against the upper edge (15) of the vertical stop surface (11) of the saw table serving as a further stop, in conjunction with which each of the grooves, together with the aforementioned upper edge, defines planes inclined at predetermined angles in relation to the supporting rail, at which angles the workpieces can be positioned.

2. Arrangement according to Claim 1, **characterized in that** each of the grooves (13) is formed by two wall surfaces positioned at right angles in relation to one another, in conjunction with which one wall surface is located in a plane tangent to the upper edge (15) of the essentially vertical stop surface (11).

3. Arrangement according to Claim 1, **characterized in that** each of the grooves (13) is formed by three surfaces, one bottom and two mutually separate walls arranged at right angles to the stop surface (10), in conjunction with which the corners between opposing walls and the stop surface form positioning lines for two surfaces which converge at one corner of the workpiece, one of which likewise must make contact with the upper edge (15) of the vertical stop surface (11), and in conjunction with which the corner of the workpiece is situated at a certain distance from the bottom of the groove (13).

## Patentansprüche

1. Anordnung für ein Gehrungssägegerät, die einen eine Stütze und einen Anschlag bildenden Sägentisch enthält, der wenigstens eine im Wesentlichen horizontale und eine zu dieser in einem Winkel angeordnete im wesentlichen vertikale Anschlagfläche zum Positionieren eines Werkstückes sowie Führungsvorrichtungen für eine Säge aufweist, die so angeordnet sind, daß sie das Ausrichten der Säge in einer beliebigen Anzahl von Winkeln zwecks Schneiden des Werkstückes in einem Winkel ermöglichen, wobei der Sägentisch Verbindung zusätzlich zu den beiden in einem Winkel zueinander angeordneten Anschlagflächen Anschlagvorrichtungen aufweist, die das geneigte Positionieren des Werkstückes ermöglichen, **dadurch gekennzeichnet, daß**
die Anschlagvorrichtungen aus mehreren in der im wesentlichen horizontalen Anschlagfläche (10) des Sägentisches (2) angeordneten Nuten (13) bestehen und diese so ausgestaltet sind, daß sie einen Eckabschnitt des Werkstückes (B) aufnehmen können, wobei dessen Seite, die der Ecke unmittelbar benachbart ist, von der oberen Kante (15) der vertikalen Anschlagfläche (11) des Sägentisches getragen wird, welche als weiterer Anschlag dient, wobei jede der Nuten zusammen mit der vorgenannten oberen Kante in vorgegebenen Winkeln bezüglich der tragenden Querstange geneigte Ebenen definieren, wobei die Werkstücke mit diesen Winkeln positioniert werden können.

2. Anordnung nach Anspruch 1,
**dadurch gekennzeichnet, daß**
jede der Nuten (13) von zwei in rechten Winkeln zueinander angeordneten Wandflächen gebildet wird, wobei eine Wandfläche in einer Ebene angeordnet ist, die tangential zur oberen Kante (15) der im wesentlichen vertikalen Anschlagfläche (12) verläuft.

3. Anordnung nach Anspruch 1,
**dadurch gekennzeichnet, daß**
jede der Nuten (13) von drei Flächen gebildet wird, einer Boden- und zwei wechselseitig separaten Wänden, die im rechten Winkeln zu der Anschlagfläche (10) angeordnet sind, wobei die Ecken zwischen den gegenüberliegenden Wänden und der Anschlagfläche Positionierlinien für zwei Flächen bilden, die an einer Ecke des Werkstückes zusammenlaufen und von denen eine ebenso die obers Kante (15) der vertikalen Anschlagfläche (11) berühren muß, und wobei die Ecke des Werkstückes in einem gewissen Abstand vom Boden der Nut (13) angeordnet ist.

## Revendications

1. Système pour un appareil à scier les onglets comprenant une table de sciage formant un support et une butée présentant au moins une surface d'arrêt essentiellement horizontale et une surface d'arrêt essentiellement verticale disposées selon un angle par rapport à celle-ci pour le positionnement d'une pièce à travailler et des dispositifs de guidage pour une scie disposés de façon à permettre l'alignement de la scie dans un nombre arbitraire d'angles pour permettre de découper la pièce selon un angle, en liaison avec lequel la table de Sciage présente, en plus des deux surfaces de butée disposées selon un angle l'une par rapport à l'autre, des dispositifs de butée permettant le positionnement incliné de la pièce à travailler, caractérisé en ce que les dispositifs de butée consistent en un certain nombre de gorges (13) disposées dans la surface de butée essentiellement horizontale (10) dans la table de sciage (2) disposées de façon à recevoir une partie de coin de la pièce à travailler (B), dont le côté immédiatement contigu au coin est destiné à être supporté en appui contre le bord supérieur (15) de la surface de butée verticale (11) de la table de sciage servant de butée supplémentaire, en liaison avec laquelle chacune des gorges, conjointement avec le bord supérieur précité, définit des plans inclinés selon des angles prédéterminés par rapport à la glissière de support, angles selon lesquels il est possible de positionner les pièces à travailler.

2. Système selon la revendication 1, caractérisé en ce que chacune des gorges (13) est formée par deux surfaces de paroi positionnées à angle droit l'une par rapport à l'autre, en liaison avec lesquelles une surface de paroi est située dans un plan tangentiel au bord supérieur (15) de la surface de butée essentiellement verticale (11).

3. Système selon la revendication 1, caractérisé en ce que chacune des gorges (13) est formée par trois surfaces, une surface de fond et deux parois réciproquement séparées disposées à angle droit par rapport à la surface de butée (10), en liaison avec laquelle les coins entre les parois opposées et la surface de butée forment des lignes de positionnement pour deux surfaces qui convergent en un coin de la pièce à travailler, dont l'une doit également entrer en contact avec le bord supérieur (15) de la surface de butée verticale (11), et en liaison avec laquelle le coin de la pièce à travailler est situé à une certaine distance par rapport au fond de la gorge (13).
